# EUROPEAN PATENT SPECIFICATION

(11) **EP 3 808 132 B1**
(45) Date of publication and mention of the grant of the patent: **13.12.2023**
(21) Application number: 19729031.5
(22) Date of filing: 11.06.2019
(51) Int. Cl.: H04W 48/18

(54) **CELLULAR TELECOMMUNICATIONS NETWORK COMPRISING A PLURALITY OF NETWORK SLICES**
ZELLULARES TELEKOMMUNIKATIONSNETZWERK MIT EINER MEHRZAHL VON NETZWERKSLICES
RÉSEAU DE TÉLÉCOMMUNICATIONS CELLULAIRE COMPRENANT DES TRANCHES DE RÉSEAU

(30) Priority: 18.06.2018 EP 18178333
(43) Date of publication of application: 21.04.2021
(73) Proprietor: British Telecommunications public limited company, London E1 8EE (GB)
(72) Inventor: CORSTON-PETRIE, Andrew, London EC4V 5BT (GB); CUEVAS RAMIREZ, Maria, London EC4V 5BT (GB)
(74) Representative: British Telecommunications public limited company Intellectual Property Department
(86) International application number: PCT/EP2019/065212
(87) International publication number: WO 2019/243113

(56) References cited:
- WO-A1-2016/192636
- US-A1- 2017 367 036
- NOKIA ET AL: "Slice Selection solution update", 3GPP DRAFT; S2-163111 WAS S2-162982 WAS S2-162717-MDD AND SLICE SELECTION IN CORE AND RAN V1, 3RD GENERATION PARTNERSHIP PROJECT (3GPP), MOBILE COMPETENCE CENTRE ; 650, ROUTE DES LUCIOLES ; F-06921 SO , vol. SA WG2, no. Nanjing, P.R. China; 20160523 - 20160527 27 May 2016 (2016-05-27), XP051116569, Retrieved from the Internet: URL:http://www.3gpp.org/ftp/tsg_sa/WG2_Arc h/TSGS2_115_Nanjing_China/Docs/ [retrieved on 2016-05-27]
- MOTOROLA MOBILITY ET AL: "Solution: PDU Sessions served by different Network Slices", 3GPP DRAFT; S2-161574_SM-NETWORK-SLICING_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, FRANCE; 20160411 - 20160415 5 April 2016 (2016-04-05), XP051086558, Retrieved from the Internet: URL:http://www.3gpp.org/ftp/tsg_sa/WG2_Arc h/TSGS2_114_Sophia_Antipolis/Docs/ [retrieved on 2016-04-05]
- HUAWEI: "Network slice selection", 3GPP DRAFT; R3-161134, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Nanjing, China; 20160523 - 20160527 22 May 2016 (2016-05-22), XP051105938, Retrieved from the Internet: URL:http://www.3gpp.org/ftp/Meetings_3GPP_ SYNC/RAN3/Docs/ [retrieved on 2016-05-22]
- HUAWEI: "Key principles for Support of Network Slicing in RAN", 3GPP DRAFT; R3-161133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Nanjing, China; 20160523 - 20160527 22 May 2016 (2016-05-22), XP051105937, Retrieved from the Internet: URL:http://www.3gpp.org/ftp/Meetings_3GPP_ SYNC/RAN3/Docs/ [retrieved on 2016-05-22]

## Description

### Field of the Invention

The present invention relates to a cellular telecommunications network.

### Background

A conventional cellular telecommunications network used dedicated hardware components that performed specific tasks. This gave network operators fine control over its infrastructure such that it could be carefully planned and deployed. However, this was also inflexible such that all parts of the infrastructure must serve all forms of services (e.g. voice, file transfer, Device-to-Device communications), rather than be tailored for providing the optimal configuration for a particular service. To address this issue, a technique called network slicing has been introduced to cellular networks.

Network slicing allows networking infrastructure to be optimised for a particular service, end-user or network operator by deploying network functions on virtualised hardware and/or customised physical hardware. This may be performed for one or more network functions across one or more nodes in the cellular network, including the radio access network, edge network and core network. In doing so, a collection of logical network functions may be grouped into a network slice which utilises virtual machines and/or customised physical hardware on one or more nodes in the cellular network. Each network slice may then be configured (e.g. by configuring each virtual machine of the network slice) such that it is optimised for a particular use case. For example, a first network slice for an autonomous vehicle application may be configured on one or more nodes in the cellular network to deliver an ultra-high reliability and ultra-low latency service, and further network slices configured for other applications may also be run on the same nodes through further virtual machines.

In cellular networks supporting network slicing, the network is pre-provisioned with a plurality of network slices and each device (including each User Equipment, UE) can be pre-configured with the slice identifier for each of the plurality of network slices. When the UE accesses a particular service, it attaches to the appropriate network slice based on a pre-configured mapping of slice identifier to service type (e.g. video-on-demand, file transfer, VoIP, etc.). However, this solution is inflexible as all devices in the cellular network must be updated upon any change in the network slices (e.g. the addition of a new network slice), and does not scale well.

It is therefore desirable to alleviate some or all of the above problems.

International Patent Application Publication No. 2016/192636 A1 discloses methods and apparatus for management of network slices in a communication network such as a 5^{th} generation wireless communication network are provided. Management planes may be provided which are separate from the plurality of network slices. A connection manager residing in a management plane receives an indication that a mobile device is to be associated with the communication network. The connection manager may reside at an access node or in the core network. A network slice is determined, and the connection manager transmits instructions, to one or more network nodes, to associate the mobile device with the network slice.

US Patent Application Publication No. 2017/367036 A1 discloses a new radio network slicing architecture may be used to facilitate network slice discovery and selection. Mechanisms to discover and select network slices may differ depending on whether a user equipment is in an idle mode or a connected mode.

3GPP Temporary Document S2-163111 (revision of S2-162982) "Slice Selection solution update" discloses a definition and analysis of the concept and need of a multidimensional descriptor in network slice selection.

### Summary of the Invention

According to a first aspect of the invention, there is provided a method as claimed in Claim 1.

Network slice capability data for first and second network slices may indicate that the first network slice is a higher priority network slice than the second network slice, and the comparison step may compare the requirement data to network slice capability data for the first network slice.

The comparison step may indicate a first matching value between the requirement data and the capability data for the first network slice and a second matching value between the requirement data and the capability data for the second network slice, and the determination may be based on the first and second matching values.

The requirement data may further indicate a weighting value for the or each metric, and the first and second matchings values may be further based on the weighting value or values.

The method may further comprise the steps of: the UE sending a request message to the service provider for the requirement data; and the service provider responding to the request message from the UE with the requirement data.

The cellular telecommunications network may include a network slice manager, the method further comprising the steps of: the UE sending a request message to the network slice manager for the network slice capability data, the request message identifying a property of the service.

The property of the service may be the service type, and the method may further comprise the steps of: the network slice manager identifying the network slice capability data for the first and second network slice based on the service type; and the network slice manager responding to the request message from the UE with the network slice capability data for the first and second network slice, wherein the UE performs the comparison and determination steps based on the network slice capability data for at least one of the first and second network slice.

The property of the service may be the requirement data, and the method may further comprise the steps of: the network slice manager comparing the requirement data to at least one of the network slice capability data for the first network slice and the network slice capability data for the second network slice; the network slice manager determining that the UE should access the service using the first network slice based on the comparison; and the network manager responding to the request message from the UE with the identity of the first network slice.

According to a second aspect of the invention, there is provided a computer program product comprising instructions which, when the program is executed by a device for a cellular telecommunications network cause the device to carry out the method of the first aspect of the invention. The computer program may be stored on a computer-readable data carrier.

According to a third aspect of the invention, there is provided a device for a cellular telecommunications network, the cellular telecommunications network having one or more network nodes are configured to implement a plurality of network slices, the device a transceiver, memory and processor adapted to cooperate to perform the steps of the first aspect of the invention.

The network slice capability data for the first and second network slices may indicate that the first network slice is a higher priority network slice than the second network slice, and the comparison step may compare the requirement data to network slice capability data for the first network slice.

The comparison step may indicate a first matching value between the requirement data and the capability data for the first network slice and a second matching value between the requirement data and the capability data for the second network slice, and the determination may be based on the first and second matching values.

The requirement data may further indicate a weighting value for the or each metric, and the first and second matchings values may be further based on the weighting value or values.

The device may be further adapted to: send a request message to the service provider for the requirement data; and the service provider responding to the request message with the requirement data.

The device may be a User Equipment (UE).

The device may be part of a system, wherein the system further comprises a network slice manager, the network slice manager having a transceiver, memory and processor adapted to cooperate to perform the steps of receiving a request message from a UE for network slice capability data, the request message identifying a property of the service.

The property of the service may be the service type, and the network slice manager may be further adapted to implement the steps of: the network slice manager identifying the network slice capability data for the first and second network slice based on the service type; and the network slice manager responding to the request message from the UE with the network slice capability data for the first and second network slice, wherein the UE performs the comparison and determination steps based on the network slice capability data for at least one of the first and second network slice.

The property of the service may be the requirement data, and the network slice manager may be further adapted to implement the steps of: the network slice manager comparing the requirement data to at least one of the network slice capability data for the first network slice and the network slice capability data for the second network slice; the network slice manager determining that the UE should access the service using the first network slice based on the comparison; and the network manager responding to the request message from the UE with the identity of the first network slice.

According to a fourth aspect of the invention, there is provided a method as claimed in Claim 20.

Following receipt of the network slice capability data for the first network slice, the method may further comprise the step of modifying the network requirement for the one or more metrics of the requirement profile based on the network capability data for the first network slice.

The requirement profile may be a first requirement profile of a plurality of requirement profiles, wherein each requirement profile of the plurality of requirement profiles may specify a network requirement for one or more metrics for the UE to access a particular version of the service of the service provider, and the method may further comprise the steps of: comparing the network slice capability data for the first network slice to the plurality of requirement profiles; identifying that the first requirement profile satisfies the first network slice's capability data; wherein the message sent to the UE identifies the version of the service associated with the first requirement profile.

The method may further comprise the steps of: receiving network slice capability data for a second network slice, the network slice capability data for the second network slice indicating the second network slice's capability for one or more metrics; comparing the network slice capability data for both the first and second network slice to the plurality of requirement profiles so as to determine that the first requirement profile satisfies the first network slice's capability data; and sending the message to the UE, the message identifying the version of the service associated with the first requirement profile and the first network slice.

### Brief Description of the Figures

In order that the present invention may be better understood, embodiments thereof will now be described, by way of example only, with reference to the accompanying drawings in which:
Figure 1 is a schematic diagram of an embodiment of a cellular telecommunications network of the present disclosure;
Figure 2 is a representation of several network slices operating upon several nodes in the network of Figure 1;
Figure 3 is a schematic diagram of a network slice manager of the network of Figure 1;
Figure 4 is a schematic diagram of a service provider network element of Figure 1;
Figure 5 is a flow diagram of a first embodiment of a method of the present disclosure; and
Figure 6 is a flow diagram of a second embodiment of a method of the present invention.

### Detailed Description of Embodiments

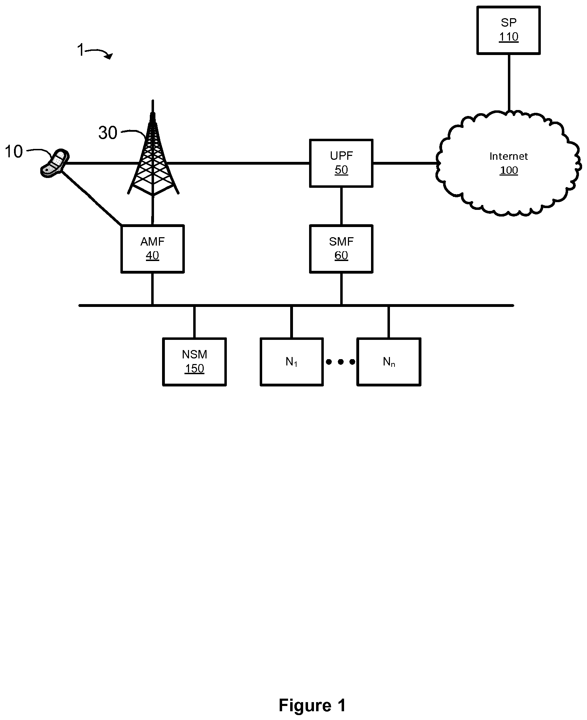

An embodiment of a cellular telecommunications network 1 of the present disclosure will now be described with reference to Figures 1 to 4. The cellular telecommunications network 1 includes a first User Equipment (UE) 10, a first base station 30, an Access and Mobility Management Function (AMF) 40 for access management and mobility management of any UE connected to the first base station 30, a User Plane Function (UPF) 50 for user data packet routing and forwarding between any UE connected to the first base station 30 and a data packet network (such as the Internet 100), and a Session Management Function (SMF) 60 for management of UE sessions and policy enforcement. Several other network nodes (N₁...Nₙ) are also shown as forming part of the cellular telecommunications network (which may include, for example, an Authentication Server Function (ASF), Unstructured Data Storage network Function (UDSF), etc.).

In this embodiment, the cellular telecommunications network 1 further includes a network slice manager 150, the purpose of which will become clear upon review of the following description. Figure 1 further illustrates a service provider network element 110, which Internet 100. Again, the purpose of the service provider network element 110 will become clear upon review of the following description.

The cellular communications network 1 is configured to implement network slicing. Accordingly, one or more of the first base station 30, AMF 40, UPF 50, SMF 60 (or any other node in the network 1) may implement Network Function Virtualisation (NFV) architectures such that virtual machines may be established on one or more of these network elements and/or include dedicated physical hardware for a particular network slice. These virtual machines and/or dedicated physical hardware may then be tailored to a particular use case (such as for a particular service or a particular network operator) by suitable configuration. A network slice may therefore be established as a portion of the cellular telecommunications network 1 that includes all required resources (grouped together as a logical network) to serve a particular use case. In this manner, multiple mobile network operators may share the same physical infrastructure by establishing their own network slices that are isolated from any other network slice.

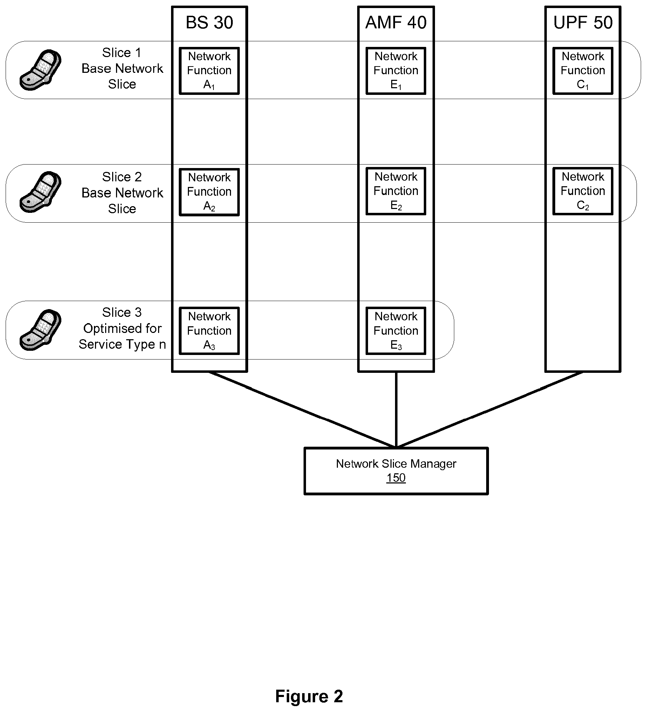

A further representation of the cellular telecommunications network 1 to illustrate these network slices is shown in Figure 2. As network slices may be run on generalised computing hardware (rather than the dedicated infrastructure of the prior art), several nodes having generalised computing hardware for implementing one or more virtual machines on an NFV architecture are shown. These nodes may therefore implement the functions of one or more of the first base station 30, AMF 40, UPF 50, SMF 60 (or any other node) of the cellular telecommunications network 1 through Software Defined Networking (SDN) environments on any one of these virtual machines. Figure 2 also illustrates a first, second and third network slice being established across several of these network nodes, in which each network slice includes a plurality of virtual machines established on each respective network node. In this embodiment, the first network slice is a base network slice for a first network operator, the second network slice is a base network slice for a second network operator, and the third network slice is for the first network operator and is optimised for a particular service. There are many other network slices (not shown) for both the first and second network operators.

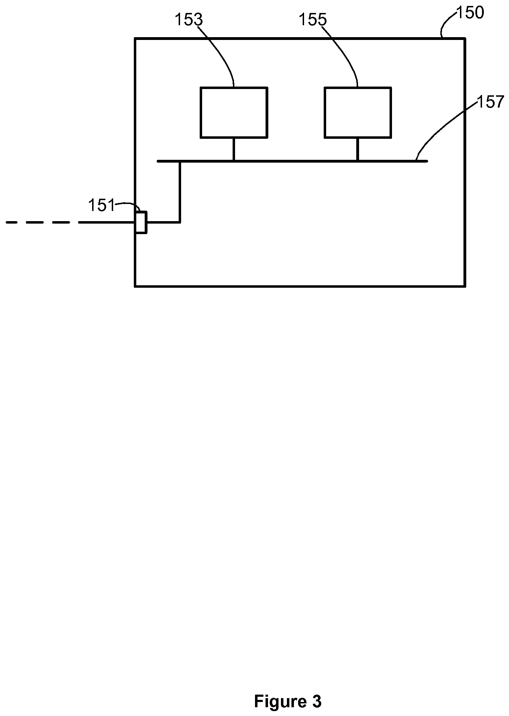

Figure 2 also illustrates each node being in communication with the network slice manager 150, which is shown in more detail in Figure 3 as having a first communications interface 151 (for communication with any other network node of the cellular telecommunications network 1), a processor 153 and memory 155, all connected via bus 157. In this embodiment, memory 155 stores a network slice capability database which includes a capability profile for each network slice in the cellular telecommunications network 1. In this example, the capability profile includes an identifier of the network operator owning the network slice (e.g. PLMN), a minimum bandwidth (*C_{b}*), an average latency (*Cₗ*), maximum jitter (*Cⱼ*), maximum packet loss (*Cₚₗ*), and a priority value. Table 1, below, illustrates the data stored in memory 155.

**Table 1: Table illustrating capability data for several network slices**

| Slice Identifier | Network Operator Identifier | Minimum Bandwidth | Average Latency | Maximum Jitter | Maximum Packet Loss | ... | Priority Value |
|---|---|---|---|---|---|---|---|
| *S¹* | *P¹* | *C_{b}¹* | *Cₗ¹* | *Cⱼ¹* | *Cₚₗ¹* | ... | 1 |
| *S²* | *P¹* | *C_{b}²* | *Cₗ²* | *Cⱼ²* | *Cₚₗ²* | ... | 2 |
| *S³* | *P²* | *C_{b}³* | *Cₗ³* | *Cⱼ³* | *Cₚₗ³* | ... | 1 |
| ... | ... | ... | ... | ... | ... | ... | ... |

The network slice manager 150 receives information on all network slices in the cellular telecommunications network 1, including network slices of different network operators. The network slice manager 150 may therefore be considered a centralised entity for storage of network slice information. In this embodiment, the network slice manager 150 transmits the capability data for all network slices that a base station may access (e.g. based on the one or more network operators that utilise that base station) to each base station in the network. In this example in which the first base station 30 is for the first network operator (*P₁*) only, the network slice manager 150 therefore transmits the capability data for the first and second network slice (S¹, S²) to the first base station 30. This data may be pushed to the first base station 30, or requested by the first base station 30, on a periodic basis.

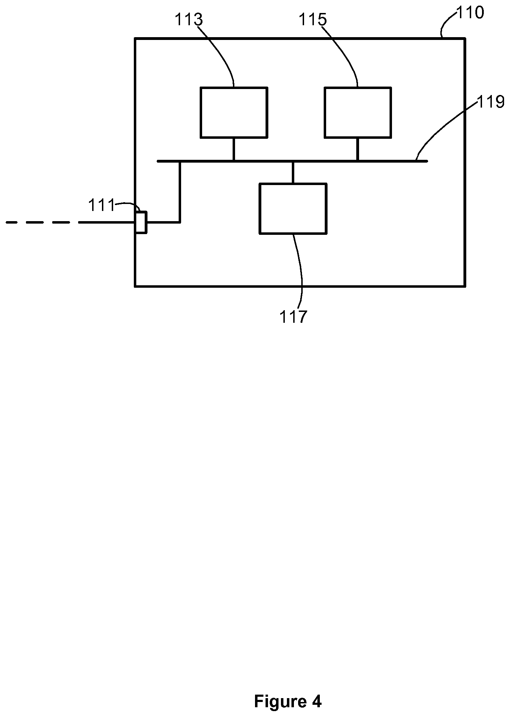

Turning back to Figure 1, the cellular telecommunications network 1 further includes a service provider network element 110 which each element of the cellular telecommunications network 1 (e.g. the first UE 10) may communicate with via the Internet 100. In this embodiment, the service provider network element 110 provides a Virtual Reality (VR) service. The service provider network element 110 is shown in more detail in Figure 4, which illustrates a first communications interface 111, a processor 113, detail in Figure 4, which illustrates a first communications interface 111, a processor 113, a content store 115 and memory 117, all connected via bus 119. The content store 115 stores one or more items of content (e.g. different VR experiences) that may be requested by a UE and, in response, delivered via the first communications interface 111. Memory 117 stores a content requirement profile database which includes a requirement profile for each item of content in the content store 115 identifying, for example, threshold values for bandwidth (*T_{b}*), latency (*Tₗ*), jitter (*Tⱼ*), and packet loss (*Tₚₗ*). These thresholds may be set by the service provider to indicate the minimum requirements of a connection between the service provider network element 110 and another entity (e.g. the first UE 10) for the other entity to receive the item of content at a satisfactory Quality of Service (QoS). The content store 115 may store multiple versions of the same content (in which each item of content represents the same content but at a particular quality level), and the content requirement profile may identify different requirements for each version. These different versions of the same content may be identified by the same content identifier but different version identifiers.

In an enhancement, the content requirement profile may further identify weightings for each requirement, such as weighting values for bandwidth (*W_{b}*), latency (*Wₗ*), jitter (*Wⱼ*) and packet loss (*Wₚₗ*). The relevance of these weightings will become clear upon review of the following description. Table 2, below, illustrates the data stored in memory 117.

**Table 2: Table illustrating several requirement profiles for several items of content**

| Content Identifier | Version Identifier | Bandwidth Threshold | Bandwidth Weighting | Latency Threshold | Latency Weighting | Jitter Threshold | ... |
|---|---|---|---|---|---|---|---|
| C¹ | *V¹* | *T_{b}^{1.1}* | W_{b}^{1.1} | *Tₗ^{1.1}* | Wₗ^{1.1} | *Tⱼ^{1.1}* | ... |
| C¹ | *V²* | *T_{b}^{1.2}* | W_{b}^{1.2} | *Tₗ^{1.2}* | Wₗ^{1.2} | *Tⱼ^{1.2}* | ... |
| C² | V¹ | *T_{b}^{2.1}* | W_{b}^{2.1} | *Tₗ^{2.1}* | Wₗ^{2.1} | *Tⱼ^{2.1}* | ... |
| ... | ... | ... | ... | ... | ... | ... | ... |

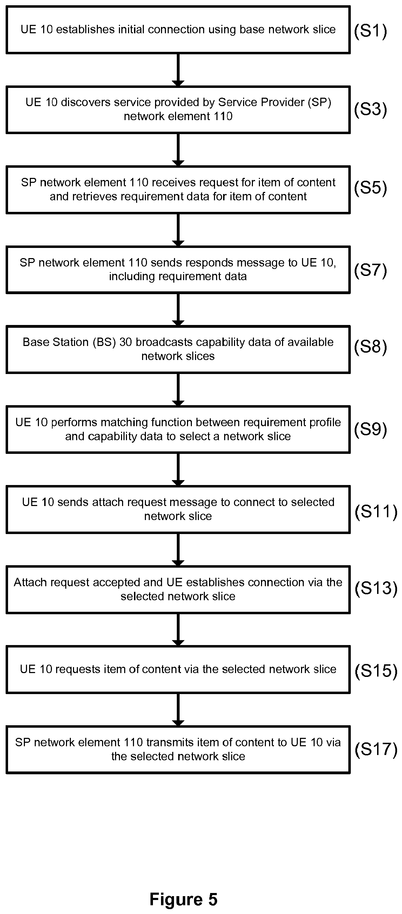

A first embodiment of a method of the present disclosure will now be described with reference to Figure 5. In a first step of the method (S1), the first UE 10 establishes an initial connection with the cellular telecommunications network 1 via the first base station 30. In this embodiment in which the network 1 includes the first network slice being a base network slice for the first network operator, this initial connection is established on the first network slice. Once the first UE 10 is connected via this first network slice, it may communicate with any node in the cellular telecommunications network 1 that is further communicate with external entities (such as the service provider network element 110) via the Internet 100.

In step S3, a user operating the first UE 10 accesses a service provided by the service provider network element 110 via the first network slice and its connection to the Internet 100. In this embodiment, the service provides a User Interface (Ul) to the user via which the user may select an item of content from all items of content in content store 115. In response to a selection by the user for a particular item of content, the first UE 10 prepares and sends a request message to the service provider network element 110 (which is sent via the first network slice) which identifies that particular item of content. As noted above, the content store 115 may store multiple versions of the same content but each having a different quality level). Accordingly, the item of content being identified by the user is for a particular version of the selected content (e.g. an Ultra High Definition, UHD, version of the content), and the request message includes both a content identifier (*C¹*) and a version identifier (*V¹*).

The service provider network element 110 receives this request message and, in step S5, identifies and retrieves the requirement profile for the content and version identifiers within the request. In step S7, a response message is prepared, including each threshold (*T_{b}^{1.1}*, *Tₗ^{1.1}*, *Tⱼ^{1.1}*, *Tₚₗ^{1.1}*) and weighting (*W_{b}*^{*1.*1} , *Wₗ*^{*1.*1} , *Wⱼ*^{*1*.1} , *Wₚₗ*^{*1*.1}) of the requirement profile, and is sent to the first UE 10 via the first network slice. The first UE 10 stores the requirement profile for the particular item of content in memory.

In step S8, the first base station 30 broadcasts (via a System Information Block (SIB) message) the capability data of all network slices (*S¹*, *S²*) that the first UE 10 may access. This data, which was previously sent from the network slice manager 150 to the first base station 30, includes the minimum bandwidth for each network slice (*C_{b}¹*, *C_{b}²*), the maximum latency for each network slice (C_{/}*¹*, *Cₗ²*), the maximum jitter for each network slice (*Cⱼ¹*, *Cⱼ²*), the maximum packet loss for each network slice (*Cₚₗ¹*, *Cₚₗ²*) and the priority value for each network slice (1, 2).

In step S9, the first UE 10 performs a matching function between the requirement profile of the identified content/version pair (sent from the service provider to the first UE 10) and the capability data (sent from the slice manager 150 to the first UE 10) to identify the preferred network slice from the available network slices. In this embodiment, the matching function is implemented using the following logic. In a first sub-step, the first UE 10 identifies the network slice having the highest priority (based on the priority value), which in this example is the first network slice, *S¹*, having priority value 1. The first UE 10 then determines if the average latency capability of *S¹* is less than the average latency requirement of the requirement profile. If so, then in a second sub-step the first UE 10 determines if the maximum jitter capability of *S¹* is less than the maximum jitter requirement of the requirement profile. If so, then in a third sub-step the first UE 10 determines if the minimum bandwidth capability of *S¹* is greater than the minimum bandwidth requirement of the requirement profile. If so, then in a fourth sub-step the first UE 10 determines if the maximum packet loss capability of *S¹* is less than the maximum packet loss requirement of the requirement profile. If all of these determinations of the first to the fourth sub-steps are positive, then network slice *S¹* is selected. If any of these determinations of the first to the fourth sub-steps are negative, then the network slice S¹ is rejected. Following a rejection, the first UE 10 identifies the next network slice based on the priority value (i.e. *S²*) and performs the same four sub-steps. This iterative process is performed until the first UE 10 selects the highest priority network slice that satisfies all requirements of the requirement profile, which will thereafter be used for accessing and consuming the content from the service provider (as will be described below). If all network slices fail to satisfy the requirements of the requirement profile, then the first UE 10 selects the base network slice for accessing and consuming the content from the service provider.

In step S11, the first UE 10 sends an attach request message to the cellular telecommunications network 1, including the network operator identifier (*P¹*) and slice identifier (*S¹*) of the selected network slice for accessing and consuming the content from the service provider. In response, in step S13, the network 1 accepts the request and the first UE 10 establishes a second connection with the network via the selected network slice. In step S15, the first UE 10 sends a request message to the service provider network element 110, via the selected network slice, for the item of content. In step S17, the service provider network element 110 responds by sending the item of content to the first UE 10, which again will be sent via the selected network slice.

The above embodiment therefore provides a mechanism for the first UE 10 to identify and match the capabilities of currently available network slices (as advised by the network) with the current requirements of a service (as advised by the service provider).

This mechanism permits evaluation of each slices' capabilities with the service's requirements based on up-to-date data, rather than one or both being static pre-provisioned data.

In the above embodiment, a matching function is used to evaluate each available network slice in priority order. However, this is non-essential and other methods of evaluating the most suitable network slice may be used. For example, the difference between the capability value and requirement value for each metric may be calculated, and a sum of all of these deltas may be used to determine a network slice eligibility value for the network slice. The network slice having the greatest eligibility value may then be selected for accessing and consuming the content from the service provider. Furthermore, the weighting values (stored in the network slice manager 150 and transmitted to the first UE 10 via the first base station 30) may be applied to each delta to modify the influence of each metric on the network slice eligibility value.

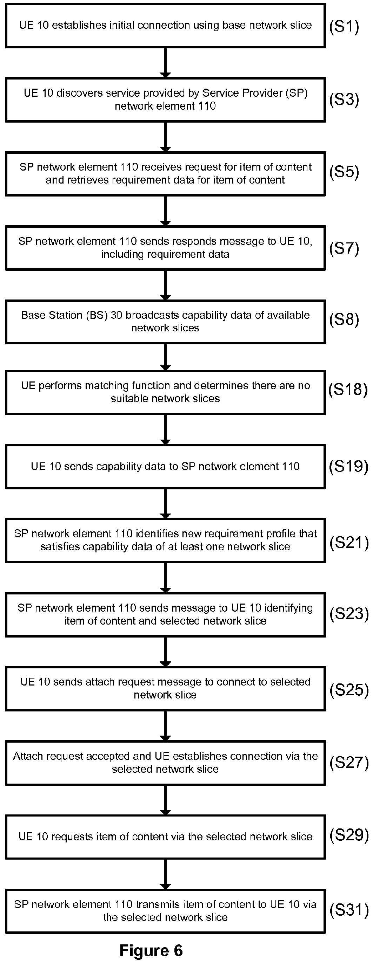

A second embodiment of a method of the present invention will now be described with reference to Figure 6. This second embodiment utilises steps S1 to S8 of the first embodiment, such that the first UE 10 receives capability data for each available network slice from the network slice manager 150 and further receives a requirement profile for the requested service from the service provider network element 110. In step S18, the first UE 10 performs the matching function between these capabilities and requirements and determines that none of the network slices identified in the response message from the network slice manager 150 satisfy the requirements. Instead of implementing the solutions outlined above (e.g. using the base network slice or finding the best match based on an eligibility algorithm), the first UE 10 sends, in step S19, the capability data for the network slices to the service provider network element 110. In this embodiment, the first UE 10 sends the capability data for the top-5 highest priority network slices (based on the network slices' priority values) to the service provider network element 110. However, the skilled person will understand that this is non-essential, and the first UE 10 may send the data for all network slices, or a set of network slices using an alternative limitation (e.g. based on a range of parameters).

In response, in step S21, the service provider network element 110 identifies a new requirement profile for the content based on the received capability data from the first UE 10. In this second embodiment, the service provider network element 110 identifies this new requirement profile by identifying another version of the same content that has a corresponding requirement profile that satisfies the capability data of at least one of the network slices. For example, the service provider network element 110 may identify a High Definition, HD, version of the same VR content and determine whether the capability data of at least one of the network slices satisfies the requirement profile for that version. If so, then that version is selected. If not, then the service provider network element 110 may identify a Standard Definition, SD, version of the same content and determine whether the capability data of at least one of the network slices satisfies the requirement profile for that version. This process repeats iteratively until the service provider network element 110 identifies either the highest quality version of the content that matches the capability data of at least one network slice, or it identifies the lowest quality version of the content. In step S23, the service provider network element 110 sends a message to the first UE 10 including the content identifier, version identifier, and network slice identifier of the identified content/version pair and the highest priority network slice that had a capability data that satisfied the content/version pair's requirement profile.

In step S25, the first UE 10 sends an attach request message to the cellular telecommunications network 1, including the network operator identifier and slice identifier of the selected network slice for accessing and consuming the content from the service provider. In response, in step S27, the network 1 accepts the request and the first UE 10 establishes a second connection with the network via the selected network slice. In step S29, the first UE 10 sends a request message to the service provider network element 110, via the selected network slice, for the item of content. In step S31, the service provider network element 110 responds by sending the item of content to the first UE 10, which again will be sent via the identified selected slice.

In the above embodiments, the network slice manager 150 sends, to each base station, the identities of each network slice that base station may use and the capability data for each of those network slices. The base stations then broadcast these slice identities and capability data such that all UEs may receive it. However, this is non-essential. In an alternative implementation, the network slice manager 150 does not transmit this data to the base stations. Instead, the UE, base station and network slice manager may cooperate such that a request message may be sent from the UE to the network slice manager for information on all available network slices (e.g. upon the UE identifying a manager for information on all available network slices (e.g. upon the UE identifying a new service), and the network slice manager may respond with the identities and capability data for the available network slices (e.g. based on that UE's network operator). In this alternative implementation, the request message sent from the UE to the network slice manager may include information on the service (e.g. by identifying the service type), and the network slice manager 150 may then only return the identities and capability data of relevant network slices (e.g. those that are tailored for that particular service). Furthermore, the request message sent from the UE to the network slice manager may include the requirement profile for the service, and the network slice manager 150 may then perform the network slice matching function to identify the network slice that the UE should use to access the service. Accordingly, the matching function may be implemented either in the UE or the network.

Embodiments of the present invention may also be implemented in a roaming scenario. That is, when the UE is connected to a base station of a visited network and discovers a new service, it may send a request message to the network slice manager of the visited network including information on the service (e.g. by identifying the service type or including the requirement profile). The network slice manager of the visited network may then forward this request to a network slice manager in the home network, which may then identify one or more network slices for that service that are also available to the UE in the visited network via a roaming agreement between the home and visited networks.

In the above embodiments, the service provider had several requirement profiles and it would select one of these requirement profiles in response to a request from a UE. However, this is non-essential and the service provider may have a single requirement profile. It would, nonetheless, be possible for this requirement profile to be modified (in a similar manner to the second embodiment above) if no suitable match was found between the network slices' capability data and this requirement profile. Furthermore, it is non-essential that the service provider offers a VR application to the end-user. The service provider may provide any form of service using the cellular network, and the corresponding requirement profile(s) may be adapted to match that service.

Figure 2 and the related description above illustrates how these embodiments may be performed upon any networking nodes that are configured for network slicing (regardless of protocol). As noted above, these networking nodes may be implemented on art). This generalised computing hardware may include, for example, a central processor unit (CPU) communicatively connected to storage and an input/output (I/O) interface via a data bus. Storage can be any read/write storage device such as a random access memory (RAM) or a non-volatile storage device. An example of a non-volatile storage device includes a disk or tape storage device. The I/O interface is an interface to devices for the input or output of data, or for both input and output of data. In this embodiment, the I/O device is a network connection (for connection, for example, to any other node in the cellular network), but may also include a keyboard, a mouse, or a display (such as a monitor). The CPU, storage, I/O interface and data bus cooperate to define a SDN operating environment in which any networking function of a networking node (e.g. UPF, AMF, SMF, etc.) may be implemented as software. In this manner, the computing hardware may be configured to operate as any one of the networking nodes by using the corresponding software. Furthermore, the computing hardware is configured to implement a NFV architecture such that it may implement a plurality of virtual machines, wherein each virtual machine may provide a different SDN operating environment implementing a particular networking function that is optimised for a particular use case (e.g. a particular network operator, a particular service, a particular user etc.).

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

## Claims

1. A method in a cellular telecommunications network in which one or more network nodes are configured to implement a first network slice, the method **characterised by**:
identifying network slice capability data for the first network slice, the network slice capability data for the first network slice indicating the first network slice's capability for one or more metrics;
sending the network slice capability data for the first network slice to a service provider (110);
receiving a message from the service provider (110) permitting access to a version of the service using the first network slice; and
initiating a connection of the User Equipment, UE, (10) to the first network slice for accessing the version of the service.

2. A method as claimed in Claim 1, wherein the first network slice is one of a plurality of network slices, the method further comprising the steps of:
identifying requirement data indicating a network requirement for the one or more metrics for the UE (10), to access the service of the service provider (110);
identifying network slice capability data for a second network slice, the network slice capability data for the second network slice indicating the second network slice's capability for the one or more metrics; and
comparing the requirement data to at least one of the network slice capability data for the first network slice and the network slice capability data for the second network slice.

3. A method as claimed in Claim 2, wherein the network slice capability data for the first and second network slices indicates that the first network slice is a higher priority network slice than the second network slice, and the comparison step first compares the requirement data to network slice capability data for the first network slice.

4. A method as claimed in Claim 2, wherein the comparison step indicates a first matching value between the requirement data and the capability data for the first network slice and a second matching value between the requirement data and the capability data for the second network slice, and the determination is based on the first and second matching values.

5. A method as claimed in Claim 4, wherein the requirement data further indicates a weighting value for the or each metric, and the first and second matching values are further based on the weighting value or values.

6. A method as claimed in any one of Claims 2 to 5, further comprising the steps of:
the UE (10) sending a request message to the service provider (110) for the requirement data; and
the service provider (110) responding to the request message from the UE (10) with the requirement data.

7. A method as claimed in any one of Claims 1 to 6, wherein the cellular telecommunications network (1) includes a network slice manager (150), the method further comprising the steps of:
the UE (10) sending a request message to the network slice manager (150) for the network slice capability data, the request message identifying a property of the service.

8. A method as claimed in Claim 7 when dependent on any one of Claims 2 to 6, wherein the property of the service is the service type, and the method further comprises the steps of:
the network slice manager (150) identifying the network slice capability data for the first and second network slice based on the service type; and
the network slice manager (150) sending a response message to the UE (10), the response message including the network slice capability data for the first and second network slices, wherein the UE (10) performs the comparison and determination steps based on the network slice capability data for at least one of the first and second network slice.

9. A method as claimed in Claim 7 when dependent on any one of Claims 2 to 6, wherein the property of the service is the requirement data, and the method further comprises the steps of:
the network slice manager (150) comparing the requirement data to at least one of the network slice capability data for the first network slice and the network slice capability data for the second network slice;
the network slice manager (150) determining that the UE (10) should access the service using the first network slice based on the comparison; and
the network manager sending a response message to the UE (10), the response message including an identifier for the first network slice.

10. A method as claimed in any one of Claims 1 to 7, wherein the service provider (110) includes a requirement profile specifying a network requirement for the one or more metrics for the UE (10) to access a version of the service of the service provider (110), and the service provider (110) is configured to modify the network requirement for the one or more metrics based on the network capability data for the first network slice.

11. A method as claimed in any one of Claims 1 to 7, further comprising the step of:
sending the network slice capability data for the second network slice to the service provider (110).

12. A method as claimed in any one of Claims 1 to 7 or 11, wherein the service provider (110) includes a plurality of requirement profiles, wherein each requirement profile of the plurality of requirement profiles specifies network requirements for the one or more metrics for the UE to access a particular version of the service of the service provider (110), and the service provider is configured to:
compare the network slice capability data for the first network slice to the plurality of requirement profiles so as to identify a first requirement profile that satisfies the first network slice's capability data; and
send a message to the UE (10), the message identifying the version of the service associated with the first requirement profile.

13. A method as claimed in Claim 12 when dependent on Claim 11, further comprising the steps of:
comparing the network slice capability data for both the first and second network slice to the plurality of requirement profiles so as to identify the first requirement profile that satisfies the first network slice's capability data; and
sending the message to the UE (10), the message identifying the version of the service associated with the first requirement profile and the first network slice.

14. A computer program product comprising instructions which, when the program is executed by a device for a cellular telecommunications network, cause the device to carry out the method of any one of the preceding claims.

15. A computer-readable data carrier having stored thereon the computer program of Claim 14.

16. A device (10) for a cellular telecommunications network, the cellular telecommunications network having one or more network nodes configured to implement a plurality of network slices, the device comprising a transceiver, memory and processor adapted to cooperate to perform the steps of any one of Claims 1 to 6.

17. A device (10) as claimed in Claim 16, being a User Equipment, UE.

18. A system including the device (10) of either Claim 16 or Claim 17, further comprising a network slice manager (150), the network slice manager (150) having a transceiver, memory and processor adapted to cooperate to perform the steps of either Claim 8 or Claim 9.

19. A system including the device (10) of either Claim 16 or Claim 17, further comprising a service provider (110) having a transceiver, memory and processor adapted to cooperate to perform the steps of any one of Claims 10, 12 or 13.

20. A method of providing a service over a cellular telecommunications network, the cellular telecommunications network (1) having one or more network nodes configured to implement a first network slice, the method **characterised by**:
specifying a requirement profile including a network requirement for one or more metrics for a UE to access a version of a service of a service provider (110);
receiving network slice capability data for the first network slice, the network slice capability data for the first network slice indicating the first network slice's capability for one or more metrics;
comparing the network slice capability data for the first network slice to the requirement profile; and
sending a message to the UE permitting access to the version of the service using the first network slice.

21. A method as claimed in Claim 20, wherein, following receipt of the network slice capability data for the first network slice, the method further comprises the step of modifying the network requirement for the one or more metrics of the requirement profile based on the network capability data for the first network slice.

22. A method as claimed in Claim 21, wherein the requirement profile is a first requirement profile of a plurality of requirement profiles, wherein each requirement profile of the plurality of requirement profiles specifies a network requirement for one or more metrics for the UE to access a particular version of the service of the service provider, and the method further comprises the steps of:
comparing the network slice capability data for the first network slice to the plurality of requirement profiles;
identifying that the first requirement profile satisfies the first network slice's capability data; wherein the message sent to the UE identifies the version of the service associated with the first requirement profile.

23. A method as claimed in Claim 22, wherein the first network slice is one of a plurality of network slices, the method further comprising the steps of:
receiving network slice capability data for a second network slice, the network slice capability data for the second network slice indicating the second network slice's capability for one or more metrics;
comparing the network slice capability data for both the first and second network slice to the plurality of requirement profiles so as to determine that the first requirement profile satisfies the first network slice's capability data; and
sending the message to the UE, the message identifying the version of the service associated with the first requirement profile and the first network slice.

## Patentansprüche

1. Verfahren in einem zellularen Telekommunikationsnetzwerk, in dem ein oder mehrere Netzwerkknoten konfiguriert sind, eine erste Netzwerkscheibe zu implementieren, das Verfahren **gekennzeichnet durch**:
Identifizieren von Netzwerkscheiben-Fähigkeitsdaten für die erste Netzwerkscheibe, wobei die Netzwerkscheiben-Fähigkeitsdaten für die erste Netzwerkscheibe die Fähigkeit der ersten Netzwerkscheibe für eine oder mehrere Metriken angeben;
Senden der Netzwerkscheiben-Fähigkeitsdaten für die erste Netzwerkscheibe an einen Dienstanbieter (110);
Empfangen einer Nachricht von dem Dienstanbieter (110), die Zugriff auf eine Version des Dienstes unter Verwendung der ersten Netzwerkscheibe gestattet; und
Einleiten einer Verbindung der Benutzerausrüstung, UE, (10) mit der ersten Netzwerkscheibe zum Zugreifen auf die Version des Dienstes.

2. Verfahren nach Anspruch 1, wobei die erste Netzwerkscheibe eine einer Vielzahl von Netzwerkscheiben ist, das Verfahren ferner die folgenden Schritte umfassend:
Identifizieren von Bedarfsdaten, die einen Netzwerkbedarf für die eine oder mehreren Metriken für die UE (10) angeben, um auf den Dienst des Dienstanbieters (110) zuzugreifen;
Identifizieren von Netzwerkscheiben-Fähigkeitsdaten für eine zweite Netzwerkscheibe, wobei die Netzwerkscheiben-Fähigkeitsdaten für die zweite Netzwerkscheibe die Fähigkeit der zweiten Netzwerkscheibe für die eine oder mehreren Metriken angeben; und
Vergleichen der Bedarfsdaten mit mindestens einem der Netzwerkscheiben-Fähigkeitsdaten für die erste Netzwerkscheibe und der Netzwerkscheiben-Fähigkeitsdaten für die zweite Netzwerkscheibe.

3. Verfahren nach Anspruch 2, wobei die Netzwerkscheiben-Fähigkeitsdaten für die ersten und zweiten Netzwerkscheiben angeben, dass die erste Netzwerkscheibe eine Netzwerkscheibe höherer Priorität als die zweite Netzwerkscheibe ist, und wobei der Schritt des Vergleichens zuerst die Bedarfsdaten mit Netzwerkscheiben-Fähigkeitsdaten für die erste Netzwerkscheibe vergleicht.

4. Verfahren nach Anspruch 2, wobei der Schritt des Vergleichens einen ersten Übereinstimmungswert zwischen den Bedarfsdaten und den Fähigkeitsdaten für die erste Netzwerkscheibe und einen zweiten Übereinstimmungswert zwischen den Bedarfsdaten und den Fähigkeitsdaten für die zweite Netzwerkscheibe angibt und wobei die Bestimmung auf den ersten und zweiten Übereinstimmungswerten basiert.

5. Verfahren nach Anspruch 4, wobei die Bedarfsdaten ferner einen Gewichtungswert für die oder jede Metrik angeben und die ersten und zweiten Übereinstimmungswerte ferner auf dem Gewichtungswert oder den -werten basieren.

6. Verfahren nach einem der Ansprüche 2 bis 5, ferner die folgenden Schritte umfassend:
Senden, durch die UE (10), einer Anforderungsnachricht an den Dienstanbieter (110) für die Bedarfsdaten; und
Antworten, durch den Dienstanbieter (110), auf die Anforderungsnachricht von der UE (10) mit den Bedarfsdaten.

7. Verfahren nach einem der Ansprüche 1 bis 6, wobei das zellulare Telekommunikationsnetzwerk (1) eine Netzwerkscheiben-Verwaltungsvorrichtung (150) enthält, das Verfahren ferner die folgenden Schritte umfassend:
Senden, durch die UE (10), einer Anforderungsnachricht an die Netzwerkscheiben-Verwaltungsvorrichtung (150) für die Netzwerkscheiben-Fähigkeitsdaten, wobei die Anforderungsnachricht eine Eigenschaft des Dienstes identifiziert.

8. Verfahren nach Anspruch 7 bei Abhängigkeit von einem der Ansprüche 2 bis 6, wobei die Eigenschaft des Dienstes der Diensttyp ist und das Verfahren ferner die folgenden Schritte umfasst:
Identifizieren, durch die Netzwerkscheiben-Verwaltungsvorrichtung (150), der Netzwerkscheiben-Fähigkeitsdaten für die erste und zweite Netzwerkscheibe basierend auf dem Diensttyp; und
Senden, durch die Netzwerkscheiben-Verwaltungsvorrichtung (150), einer Antwortnachricht an die UE (10), wobei die Antwortnachricht die Netzwerkscheiben-Fähigkeitsdaten für die ersten und zweiten Netzwerkscheiben enthält, wobei die UE (10) die Schritte des Vergleichens und Bestimmens basierend auf den Netzwerkscheiben-Fähigkeitsdaten für mindestens eine der ersten und zweiten Netzwerkscheibe durchführt.

9. Verfahren nach Anspruch 7 bei Abhängigkeit von einem der Ansprüche 2 bis 6, wobei die Eigenschaft des Dienstes die Bedarfsdaten ist und wobei das Verfahren ferner die folgenden Schritte umfasst:
Vergleichen, durch die Netzwerkscheiben-Verwaltungsvorrichtung (150), der Bedarfsdaten mit mindestens einem der Netzwerkscheiben-Fähigkeitsdaten für die erste Netzwerkscheibe und der Netzwerkscheiben-Fähigkeitsdaten für die zweite Netzwerkscheibe;
Bestimmen, durch die Netzwerkscheiben-Verwaltungsvorrichtung (150), dass die UE (10) auf den Dienst unter Verwendung der ersten Netzwerkscheibe basierend auf dem Vergleich zugreifen sollte; und
Senden, durch die Netzwerk-Verwaltungsvorrichtung, einer Antwortnachricht an die UE (10), wobei die Antwortnachricht eine Kennung für die erste Netzwerkscheibe enthält.

10. Verfahren nach einem der Ansprüche 1 bis 7, wobei der Dienstanbieter (110) ein Bedarfsprofil enthält, das einen Netzwerkbedarf für die eine oder mehreren Metriken für die UE (10) zum Zugreifen auf eine Version des Dienstes des Dienstanbieters (110) spezifiziert und wobei der Dienstanbieter (110) konfiguriert ist, den Netzwerkbedarf für die eine oder mehreren Metriken basierend auf den Netzwerk-Fähigkeitsdaten für die erste Netzwerkscheibe zu modifizieren.

11. Verfahren nach einem der Ansprüche 1 bis 7, ferner den folgenden Schritt umfassend:
Senden der Netzwerkscheiben-Fähigkeitsdaten für die zweite Netzwerkscheibe an den Dienstanbieter (110).

12. Verfahren nach einem der Ansprüche 1 bis 7 oder 11, wobei der Dienstanbieter (110) eine Vielzahl von Bedarfsprofilen enthält, wobei jedes Bedarfsprofil der Vielzahl von Bedarfsprofilen Netzwerkbedarfe für die eine oder mehreren Metriken für die UE zum Zugreifen auf eine besondere Version des Dienstes des Dienstanbieters (110) spezifiziert und der Dienstanbieter konfiguriert ist zum:
Vergleichen der Netzwerkscheiben-Fähigkeitsdaten für die erste Netzwerkscheibe mit der Vielzahl von Bedarfsprofilen, um ein erstes Bedarfsprofil zu identifizieren, das der Fähigkeit der ersten Netzwerkscheiben-Daten entspricht; und
Senden einer Nachricht an die UE (10), wobei die Nachricht die Version des Dienstes, die mit dem ersten Bedarfsprofil assoziiert ist, identifiziert.

13. Verfahren nach Anspruch 12 bei Abhängigkeit von Anspruch 11, ferner die folgenden Schritte umfassend:
Vergleichen der Netzwerkscheiben-Fähigkeitsdaten für sowohl die erste als auch die zweite Netzwerkscheibe mit der Vielzahl von Bedarfsprofilen, um das erste Bedarfsprofil zu identifizieren, das der Fähigkeit der ersten Netzwerkscheiben-Daten entspricht; und
Senden der Nachricht an die UE (10), wobei die Nachricht die Version des Dienstes, die mit dem ersten Bedarfsprofil assoziiert ist, und die erste Netzwerkscheibe identifiziert.

14. Computerprogrammprodukt, umfassend Anweisungen, die, wenn das Programm durch eine Vorrichtung für ein zellulares Telekommunikationsnetzwerk ausgeführt wird, die Vorrichtung veranlassen, das Verfahren nach einem der vorhergehenden Ansprüche auszuführen.

15. Computerlesbarer Datenträger, der darin gespeichert das Computerprogramm nach Anspruch 14 aufweist.

16. Vorrichtung (10) für ein zellulares Telekommunikationsnetzwerk, wobei das zellulare Telekommunikationsnetzwerk ein oder mehrere Netzwerkknoten aufweist, die konfiguriert sind zum Implementieren einer Vielzahl von Netzwerkscheiben, die Vorrichtung umfassend einen Sender/Empfänger, Speicher und Prozessor, die angepasst sind, zusammenzuarbeiten, um die Schritte nach einem der Ansprüche 1 bis 6 durchzuführen.

17. Vorrichtung (10) nach Anspruch 16, die eine Benutzerausrüstung, UE, ist.

18. System, enthaltend die Vorrichtung (10) nach entweder Anspruch 16 oder Anspruch 17, ferner umfassend eine Netzwerkscheiben-Verwaltungsvorrichtung (150), wobei die Netzwerkscheiben-Verwaltungsvorrichtung (150) einen Sender/Empfänger, Speicher und Prozessor aufweist, die angepasst sind, zusammenzuarbeiten, um die Schritte nach entweder Anspruch 8 oder Anspruch 9 durchzuführen.

19. System, enthaltend die Vorrichtung (10) nach entweder Anspruch 16 oder Anspruch 17, ferner umfassend einen Dienstanbieter (110), der einen Sender/Empfänger, Speicher und Prozessor aufweist, die angepasst sind, zusammenzuarbeiten, um die Schritte nach einem der Ansprüche 10, 12 oder 13 durchzuführen.

20. Verfahren zum Bereitstellen eines Dienstes über ein zellulares Telekommunikationsnetzwerk, wobei das zellulare Telekommunikationsnetzwerk (1) ein oder mehrere Netzwerkknoten aufweist, die konfiguriert sind, eine erste Netzwerkscheibe zu implementieren, das Verfahren **gekennzeichnet durch**:
Spezifizieren eines Bedarfsprofils, enthaltend einen Netzwerkbedarf für ein oder mehrere Metriken für eine UE zum Zugreifen auf eine Version eines Dienstes eines Dienstanbieters (110);
Empfangen von Netzwerkscheiben-Fähigkeitsdaten für die erste Netzwerkscheibe, wobei die Netzwerkscheiben-Fähigkeitsdaten für die erste Netzwerkscheibe die Fähigkeit der ersten Netzwerkscheibe für ein oder mehrere Metriken angeben;
Vergleichen der Netzwerkscheiben-Fähigkeitsdaten für die erste Netzwerkscheibe mit dem Bedarfsprofil; und
Senden einer Nachricht an die UE, die Zugriff auf die Version des Dienstes unter Verwendung der ersten Netzwerkscheibe gestattet.

21. Verfahren nach Anspruch 20, wobei, nach dem Empfang der Netzwerkscheiben-Fähigkeitsdaten für die erste Netzwerkscheibe, das Verfahren ferner den Schritt des Modifizierens des Netzwerkbedarfs für die eine oder mehreren Metriken des Bedarfsprofils basierend auf den Netzwerk-Fähigkeitsdaten für die erste Netzwerkscheibe umfasst.

22. Verfahren nach Anspruch 21, wobei das Bedarfsprofil ein erstes Bedarfsprofil einer Vielzahl von Bedarfsprofilen ist, wobei jedes Bedarfsprofil der Vielzahl von Bedarfsprofilen einen Netzwerkbedarf für eine oder mehrere Metriken für die UE zum Zugreifen auf eine besondere Version des Dienstes des Dienstanbieters spezifiziert und wobei das Verfahren ferner die folgenden Schritte umfasst:
Vergleichen der Netzwerkscheiben-Fähigkeitsdaten für die erste Netzwerkscheibe mit der Vielzahl von Bedarfsprofilen;
Identifizieren, dass das erste Bedarfsprofil der Fähigkeit der ersten Netzwerkscheiben-Daten entspricht; wobei die an die UE gesandte Nachricht die Version des Dienstes, die mit dem ersten Bedarfsprofil assoziiert ist, identifiziert.

23. Verfahren nach Anspruch 22, wobei die erste Netzwerkscheibe eine einer Vielzahl von Netzwerkscheiben ist, das Verfahren ferner die folgenden Schritte umfassend:
Empfangen von Netzwerkscheiben-Fähigkeitsdaten für eine zweite Netzwerkscheibe, wobei die Netzwerkscheiben-Fähigkeitsdaten für die zweite Netzwerkscheibe die Fähigkeit der zweiten Netzwerkscheibe für eine oder mehrere Metriken angeben;
Vergleichen der Netzwerkscheiben-Fähigkeitsdaten für sowohl die erste als auch die zweite Netzwerkscheibe mit der Vielzahl von Bedarfsprofilen, um zu bestimmen, dass das erste Bedarfsprofil der Fähigkeit der ersten Netzwerkscheiben-Daten entspricht; und
Senden der Nachricht an die UE, wobei die Nachricht die Version des Dienstes, die mit dem ersten Bedarfsprofil assoziiert ist, und die erste Netzwerkscheibe identifiziert.

## Revendications

1. Procédé dans un réseau cellulaire de télécommunications dans lequel un ou plusieurs noeuds de réseau sont configurés pour mettre en œuvre une première tranche de réseau, le procédé étant **caractérisé par** les étapes consistant à :
identifier des données de capacité de tranche de réseau relatives à la première tranche de réseau, les données de capacité de tranche de réseau relatives à la première tranche de réseau indiquant la capacité de la première tranche de réseau pour une ou plusieurs métriques ;
envoyer les données de capacité de tranche de réseau relatives à la première tranche de réseau à un fournisseur (110) de service ;
recevoir un message provenant du fournisseur (110) de service autorisant l'accès à une version du service à l'aide de la première tranche de réseau ; et
déclencher une connexion de l'équipement d'utilisateur, UE, (10) à la première tranche de réseau pour accéder à la version du service.

2. Procédé selon la revendication 1, la première tranche de réseau étant une tranche d'une pluralité de tranches de réseau, le procédé comportant en outre les étapes consistant à :
identifier des données d'exigence indiquant une exigence de réseau portant sur la ou les métriques pour l'UE (10), pour accéder au service du fournisseur (110) de service ;
identifier des données de capacité de tranche de réseau pour une seconde tranche de réseau, les données de capacité de tranche de réseau relatives à la seconde tranche de réseau indiquant la capacité de la seconde tranche de réseau pour la ou les métriques ; et
comparer les données d'exigence aux données de capacité de tranche de réseau relatives à la première tranche de réseau et/ou aux données de capacité de tranche de réseau relatives à la seconde tranche de réseau.

3. Procédé selon la revendication 2, les données de capacité de tranche de réseau relatives aux première et seconde tranches de réseau indiquant que la première tranche de réseau est une tranche de réseau de plus haute priorité que la seconde tranche de réseau, et l'étape de comparaison comparant d'abord les données d'exigence à des données de capacité de tranche de réseau relatives à la première tranche de réseau.

4. Procédé selon la revendication 2, l'étape de comparaison indiquant une première valeur de concordance entre les données d'exigence et les données de capacité relatives à la première tranche de réseau et une seconde valeur de concordance entre les données d'exigence et les données de capacité relatives à la seconde tranche de réseau, et la détermination étant basée sur les première et seconde valeurs de concordance.

5. Procédé selon la revendication 4, les données d'exigence indiquant en outre une valeur de pondération pour la ou chaque métrique, et les première et seconde valeurs de concordance étant en outre basées sur la ou les valeurs de pondération.

6. Procédé selon l'une quelconque des revendications 2 à 5, comportant en outre :
l'envoi, par l'UE (10) au fournisseur (110) de service, d'un message de demande portant sur les données d'exigence ; et
le fait que le fournisseur (110) de service réponde au message de demande provenant de l'UE (10) avec les données d'exigence.

7. Procédé selon l'une quelconque des revendications 1 à 6, le réseau cellulaire (1) de télécommunications comprenant un gestionnaire (150) de tranches de réseau, le procédé comportant en outre :
l'envoi, par l'UE (10) au gestionnaire (150) de tranches de réseau, d'un message de demande portant sur les données de capacité de tranche de réseau, le message de demande identifiant une propriété du service.

8. Procédé selon la revendication 7 lorsqu'elle est dépendante de l'une quelconque des revendications 2 à 6, la propriété du service étant le type de service, et le procédé comportant en outre :
l'identification, par le gestionnaire (150) de tranches de réseau, des données de capacité de tranche de réseau relatives à la première et à la seconde tranche de réseau d'après le type de service ; et
l'envoi, par le gestionnaire (150) de tranches de réseau, d'un message de réponse à l'UE (10), le message de réponse comprenant les données de capacité de tranche de réseau relatives aux première et seconde tranches de réseau, l'UE (10) réalisant les étapes de comparaison et de détermination d'après les données de capacité de tranche de réseau relatives à au moins une tranche parmi la première et la seconde tranche de réseau.

9. Procédé selon la revendication 7 lorsqu'elle est dépendante de l'une quelconque des revendications 2 à 6, la propriété du service étant les données d'exigence, et le procédé comportant en outre :
la comparaison, par le gestionnaire (150) de tranches de réseau, des données d'exigence aux données de capacité de tranche de réseau relatives à la première tranche de réseau et/ou aux données de capacité de tranche de réseau relatives à la seconde tranche de réseau ;
la détermination, par le gestionnaire (150) de tranches de réseau, du fait que l'UE (10) doit accéder au service à l'aide de la première tranche de réseau d'après la comparaison ; et
l'envoi, par le gestionnaire de réseau, d'un message de réponse à l'UE (10), le message de réponse comprenant un identifiant pour la première tranche de réseau.

10. Procédé selon l'une quelconque des revendications 1 à 7, le fournisseur (110) de service comprenant un profil d'exigence spécifiant une exigence de réseau portant sur la ou les métriques pour que l'UE (10) accède à une version du service du fournisseur (110) de service, et le fournisseur (110) de service étant configuré pour modifier l'exigence de réseau relative à la ou aux métriques d'après les données de capacité de réseau relatives à la première tranche de réseau.

11. Procédé selon l'une quelconque des revendications 1 à 7, comportant en outre l'étape consistant à :
envoyer au fournisseur (110) de service les données de capacité de tranche de réseau relatives à la seconde tranche de réseau.

12. Procédé selon l'une quelconque des revendications 1 à 7 ou 11, le fournisseur (110) de service comprenant une pluralité de profils d'exigences, chaque profil d'exigence de la pluralité de profils d'exigences spécifiant des exigences de réseau relatives à la ou aux métriques pour que l'UE accède à une version particulière du service du fournisseur (110) de service, et le fournisseur de service étant configuré pour :
comparer les données de capacité de tranche de réseau relatives à la première tranche de réseau à la pluralité de profils d'exigences de façon à identifier un premier profil d'exigence qui satisfait aux données de capacité de la première tranche de réseau ; et
envoyer un message à l'UE (10), le message identifiant la version du service associée au premier profil d'exigence.

13. Procédé selon la revendication 12 lorsqu'elle est dépendante de la revendication 11, comportant en outre les étapes consistant à :
comparer les données de capacité de tranche de réseau relatives à la fois à la première et à la seconde tranche de réseau avec la pluralité de profils d'exigences de façon à identifier le premier profil d'exigence qui satisfait aux données de capacité de la première tranche de réseau ; et
envoyer le message à l'UE (10), le message identifiant la version du service associée au premier profil d'exigence et à la première tranche de réseau.

14. Produit de programme d'ordinateur comportant des instructions qui, lorsque le programme est exécuté par un dispositif destiné à un réseau cellulaire de télécommunications, amènent le dispositif à réaliser le procédé selon l'une quelconque des revendications précédentes.

15. Support de données lisible par ordinateur sur lequel est stocké le programme d'ordinateur selon la revendication 14.

16. Dispositif (10) destiné à un réseau cellulaire de télécommunications, le réseau cellulaire de télécommunications possédant un ou plusieurs noeuds de réseau configurés pour mettre en œuvre une pluralité de tranches de réseau, le dispositif comportant un émetteur-récepteur, une mémoire et un processeur prévus pour coopérer afin de réaliser les étapes selon l'une quelconque des revendications 1 à 6.

17. Dispositif (10) selon la revendication 16, celui-ci étant un équipement d'utilisateur, UE.

18. Système comprenant le dispositif (10) selon l'une ou l'autre des revendications 16 et 17, comportant en outre un gestionnaire (150) de tranches de réseau, le gestionnaire (150) de tranches de réseau étant doté d'un émetteur-récepteur, d'une mémoire et d'un processeur prévus pour coopérer afin de réaliser les étapes selon l'une ou l'autre des revendications 8 et 9.

19. Système comprenant le dispositif (10) selon l'une ou l'autre des revendications 16 et 17, comportant en outre un fournisseur (110) de service qui est doté d'un émetteur-récepteur, d'une mémoire et d'un processeur prévus pour coopérer afin de réaliser les étapes selon l'une quelconque des revendications 10, 12 ou 13.

20. Procédé de fourniture d'un service via un réseau cellulaire de télécommunications, le réseau cellulaire (1) de télécommunications possédant un ou plusieurs noeuds de réseau configurés pour mettre en œuvre une première tranche de réseau, le procédé étant **caractérisé par** les étapes consistant à :
spécifier un profil d'exigence comprenant une exigence de réseau pour une ou plusieurs métriques pour qu'un UE accède à une version d'un service d'un fournisseur (110) de service ;
recevoir des données de capacité de tranche de réseau relatives à la première tranche de réseau, les données de capacité de tranche de réseau relatives à la première tranche de réseau indiquant la capacité de la première tranche de réseau pour une ou plusieurs métriques ;
comparer les données de capacité de tranche de réseau relatives à la première tranche de réseau au profil d'exigence ; et
envoyer à l'UE un message autorisant l'accès à la version du service à l'aide de la première tranche de réseau.

21. Procédé selon la revendication 20, le procédé comportant en outre, suite à la réception des données de capacité de tranche de réseau relatives à la première tranche de réseau, l'étape consistant à modifier l'exigence de réseau relative à la ou aux métriques du profil d'exigence d'après les données de capacité de réseau relatives à la première tranche de réseau.

22. Procédé selon la revendication 21, le profil d'exigence étant un premier profil d'exigence d'une pluralité de profils d'exigences, chaque profil d'exigence de la pluralité de profils d'exigences spécifiant une exigence de réseau pour une ou plusieurs métriques pour que l'UE accède à une version particulière du service du fournisseur de service, et le procédé comportant en outre les étapes consistant à :
comparer les données de capacité de tranche de réseau relatives à la première tranche de réseau avec la pluralité de profils d'exigences ;
identifier que le premier profil d'exigence satisfait aux données de capacité de la première tranche de réseau ; le message envoyé à l'UE identifiant la version du service associée au premier profil d'exigence.

23. Procédé selon la revendication 22, la première tranche de réseau étant une tranche d'une pluralité de tranches de réseau, le procédé comportant en outre les étapes consistant à :
recevoir des données de capacité de tranche de réseau relatives à une seconde tranche de réseau, les données de capacité de tranche de réseau relatives à la seconde tranche de réseau indiquant la capacité de la seconde tranche de réseau pour une ou plusieurs métriques ;
comparer les données de capacité de tranche de réseau relatives à la fois à la première et à la seconde tranche de réseau avec la pluralité de profils d'exigences de façon à déterminer que le premier profil d'exigence satisfait aux données de capacité de la première tranche de réseau ; et
envoyer le message à l'UE, le message identifiant la version du service associée au premier profil d'exigence et la première tranche de réseau.
